# EUROPEAN PATENT APPLICATION

(11) **EP 1 395 029 A1**
(43) Date of publication of application: **03.03.2004**
(21) Application number: 02769603.8
(22) Date of filing: 15.05.2002
(51) Int. Cl.: H04M 15/00, H04M 3/36, H04Q 7/38

(54) **USE CHARGE CALCULATION SYSTEM, METHOD, PROGRAM, AND COMPUTER−READABLE RECORDING MEDIUM**

(30) Priority: 15.05.2001 JP 2001145241
(71) Applicant: NTT DoCoMo, Inc., Tokyo 100-6150 (JP)
(72) Inventor: MURAKAMI, Shinichiro, DoCoMo, Inc., Chiyoda-ku, Tokyo 100-6150 (JP)
(74) Representative: GROSSE BOCKHORNI SCHUMACHER
(86) International application number: PCT/JP2002/004690
(87) International publication number: WO 2002/093897

(57) **Abstract**

The invention relates to a charge calculating system for enabling charge setting for use of a mobile terminal according to traffic between the mobile terminal and a base station. The charge calculating system is provided with a charge determination information storage section for storing message degree factors for calculation of a charge for use of a mobile telephone, corresponding to traffic of a base station; a traffic measurement section for measuring traffic of the base station; an applied charge selection section for selecting a message degree factor to be applied to the mobile telephone, from those stored in the charge determination information storage section, on the basis of the measured traffic; and a charge calculation section for calculating a charge for use of the mobile telephone on the basis of the selected message degree factor.

## Description

### Technical Field

The present invention relates to a charge calculating system, a charge calculating method, a charge calculating program, and a computer-readable recording medium for calculating a charge for use of a mobile terminal.

### Background Art

The mobile terminals such as cellular phones and PHS (Personal Handyphone System) terminals permit calls or data communications by transmission of information via base stations. Each base station covers a certain area and exchanges information through the media of radio waves with a plurality of mobile terminals located in that area. In general, the base stations and mobile terminals implement multiple access by dividing radio waves in some method and the number of mobile terminals capable of simultaneously transmitting or receiving information to or from a base station as a result of such multiple access, is referred to as the number of channels of the base station.

As a billing method for the mobile terminals such as the cellular phones and PHS terminals, there is the following method employed: a charge is calculated by multiplying a message degree determined according to a call duration, by a unit rate prescribed according to a time zone, a call distance, etc. in use of each mobile terminal.

### Disclosure of the Invention

The number of channels of each base station is determined with some margin in order to minimize trouble in calls and others of the mobile terminals, but the mobile terminals can be congested at a specific site because of an extra event or the like. In such cases, the number of mobile terminals trying to make calls and others can be greater than the set number of channels. Under those circumstances, the mobile terminals cannot make calls or data communications easily via the base station.

A conceivable way of avoiding this situation is to provide a greater margin in the number of channels of the base station. However, many channels will be excess during periods without any extra event or the like, so that facility resources may be wasted. In the system configuration with a small margin in the number of channels on the other hand, the number of channels will be short on the occasion of an extra event or the like, which might put a load on the mobile terminal users because of incapability of use of the mobile terminals. On such occasions, the users cannot use the mobile terminals in spite of payment of the basic charge or the like, so that they feel dissatisfied. The mobile telecommunications carriers have taken no action to prevent the situation, for the users.

An object of the present invention is, therefore, to provide a charge calculating system, a charge calculating method, a charge calculating program, and a computer-readable recording medium for enabling charge setting for use of a mobile terminal according to traffic between the mobile terminal and a base station.

A charge calculating system according to the present invention comprises charge determination information storage means for storing charge determination information for calculating a charge for use in transmission/reception of information at a mobile terminal, corresponding to traffic of a base station communicating with the mobile terminal; traffic measurement means for measuring the traffic of the base station; applied charge selection means for selecting charge determination information to be applied to the mobile terminal performing transmission/reception of information through the base station, from the charge determination information stored in the charge determination information storage means, on the basis of the traffic measured; and charge calculation means for calculating a charge for use of the mobile terminal performing the transmission/reception of information through the base station, on the basis of the charge determination information selected.

According to the present invention, the charge determination information is selected from those stored in the charge determination information storage means, on the basis of the traffic of the base station measured by the traffic measurement means, and thus the charge for use according to the actual traffic of the base station can be calculated using the selected charge determination information.

The charge calculating system of the present invention may be configured so that the traffic measurement means measures the traffic of the base station on a periodic basis. In this configuration, the actual traffic of the base station is measured on a periodic basis, so that the charge determination information can be selected on a periodic basis. Therefore, the charge for use according to the actual traffic of the base station can be calculated using the charge determination information selected on a periodic basis.

The charge calculating system of the present invention may be configured to further comprise information notification means for notifying the mobile terminal performing the transmission/reception of information through the base station, of the charge determination information selected by the applied charge selection means. In this configuration, the mobile terminal can be notified of the charge determination information selected by the applied charge selection means, so that the charge determination information can be used, for example, as reference information when the user using the mobile terminal determines whether to use the mobile terminal or not.

The charge calculating system of the present invention may be configured to further comprise information notification means for notifying the mobile terminal performing the transmission/reception of information through the base station, of the traffic of the base station measured by the traffic measurement means. In this configuration, the mobile terminal can be notified of the traffic of the base station measured by the traffic measurement means, so that the traffic can be used, for example, as reference information when the user using the mobile terminal determines whether to use the mobile terminal or not.

A charge calculating method according to the present invention comprises a first step of letting traffic measurement means measure traffic of a base station communicating with a mobile terminal; a second step of letting applied charge selection means select charge determination information to be applied to the mobile terminal performing transmission/reception of information through the base station, on the basis of the traffic measured by the traffic measurement means, from charge determination information for calculating a charge for use in the transmission/reception of information at the mobile terminal, which charge determination information storage means stores corresponding to traffic of the base station; and a third step of letting charge calculation means calculate a charge for use of the mobile terminal performing the transmission/reception of information through the base station, on the basis of the charge determination information selected by the applied charge selection means.

According to the present invention, the charge determination information is selected from those stored in the charge determination information storage means, on the basis of the traffic of the base station measured by the traffic measurement means, so that the charge for use according to the actual traffic of the base station can be calculated using the selected charge determination information.

The charge calculating method of the present invention may be configured so that at the first step the traffic measurement means measures the traffic of the base station on a periodic basis. In this configuration, the actual traffic of the base station is measured on a periodic basis, so that the charge determination information can be selected on a periodic basis. Therefore, the charge for use according to the actual traffic of the base station can be calculated using the charge determination information selected on a periodic basis.

The charge calculating method of the present invention may be configured to further comprise a fourth step of letting information notification means notify the mobile terminal performing the transmission/reception of information through the base station, of the charge determination information selected by the applied charge selection means. In this configuration, the mobile terminal can be notified of the charge determination information selected by the applied charge selection means, so that the charge determination information can be used, for example, as reference information when the user using the mobile terminal determines whether to use the mobile terminal or not.

The charge calculating method of the present invention may be configured to further comprise a fourth step of letting information notification means notify the mobile terminal performing the transmission/reception of information through the base station, of the traffic of the base station measured by the traffic measurement means. In this configuration, the mobile terminal can be notified of the traffic of the base station measured by the traffic measurement means, so that the traffic can be used, for example, as reference information when the user using the mobile terminal determines whether to use the mobile terminal or not.

A charge calculating program according to the present invention is configured to make a computer function as: charge determination information storage means for storing charge determination information for calculating a charge for use in transmission/reception of information at a mobile terminal, corresponding to traffic of a base station communicating with the mobile terminal; traffic measurement means for measuring the traffic of the base station; applied charge selection means for selecting charge determination information to be applied to the mobile terminal performing transmission/reception of information through the base station, from the charge determination information stored in the charge determination information storage means, on the basis of the traffic measured; and charge calculation means for calculating a charge for use of the mobile terminal performing the transmission/reception of information through the base station, on the basis of the charge determination information selected.

When the charge calculating program of the present invention is executed by the computer, the charge determination information is selected from those stored in the charge determination information storage means, on the basis of the traffic of the base station measured by the traffic measurement means, so that the charge for use according to the actual traffic of the base station can be calculated using the selected charge determination information.

It is also possible to employ a configuration wherein the computer is made to execute the charge calculating program of the present invention so that the traffic measurement means measures the traffic of the base station on a periodic basis. In this configuration, the actual traffic of the base station is measured on a periodic basis, so that the charge determination information can be selected on a periodic basis. Therefore, the charge for use according to the actual traffic of the base station can be calculated using the charge determination information selected on a periodic basis.

It is also possible to employ a configuration wherein the computer is made to execute the charge calculating program of the present invention so as to function further as information notification means for notifying the mobile terminal performing the transmission/reception of information through the base station, of the charge determination information selected by the applied charge selection means. In this configuration, the mobile terminal can be notified of the charge determination information selected by the applied charge selection means, so that the charge determination information can be used, for example, as reference information when the user using the mobile terminal determines whether to use the mobile terminal or not.

It is also possible to employ a configuration wherein the computer is made to execute the charge calculating program of the present invention so as to function further as information notification means for notifying the mobile terminal performing the transmission/reception of information through the base station, of the traffic of the base station measured by the traffic measurement means. In this configuration, the mobile terminal can be notified of the traffic of the base station measured by the traffic measurement means, so that the traffic can be used, for example, as reference information when the user using the mobile terminal determines whether to use the mobile terminal or not.

A computer-readable recording medium according to the present invention is a recording medium in which the charge calculating program configured in either of the above configurations is recorded.

When the computer is used to execute the charge calculating program recorded in the recording medium of the present invention, the charge determination information is selected from those stored in the charge determination information storage means, on the basis of the traffic of the base station measured by the traffic measurement means, so that the charge for use according to the actual traffic of the base station can be calculated using the selected charge determination information.

### Brief Description of the Drawings

Fig. 1 is a diagram showing a communication system incorporating a charge calculating system as an embodiment of the present invention.
Fig. 2 is a diagram showing an example of information stored in a number-of-channels storage section of the charge calculating system.
Fig. 3 is a diagram showing an example of information stored in a charge determination information storage section of the charge calculating system.
Fig. 4 is a diagram showing an example of information stored in an applied charge storage section of the charge calculating system.
Fig. 5a is a diagram showing an example of information displayed on a mobile telephone.
Fig. 5b is a diagram showing another example of information displayed on a mobile telephone.
Fig. 5c is a diagram showing still another example of information displayed on a mobile telephone.
Fig. 6 is a diagram showing an example of information calculated by a charge calculation section of the charge calculating system.
Fig. 7 is a chart showing a processing flow of the charge calculating system.
Fig. 8 is a diagram showing a configuration of a charge calculating program as an embodiment of the present invention.
Fig. 9 is a block diagram showing a system configuration of a computer.
Fig. 10 is a perspective view of the computer.

### Best Mode for Carrying out the Invention

Embodiments of the present invention will be described below with reference to the drawings. The same portions will be denoted by the same reference symbols and redundant description will be omitted as much as possible. In the embodiments mobile telephones are used as mobile terminals, but PHS terminals may also be used. Although the embodiments will be described using the mobile telephones of the PDC (Personal Digital Cellular) system being one of the TDMA (Time Division Multiple Access) systems, the mobile telephones may be digital mobile telephones of other systems, e.g., the CDMA (Code Division Multiple Access) system, or analog mobile telephones.

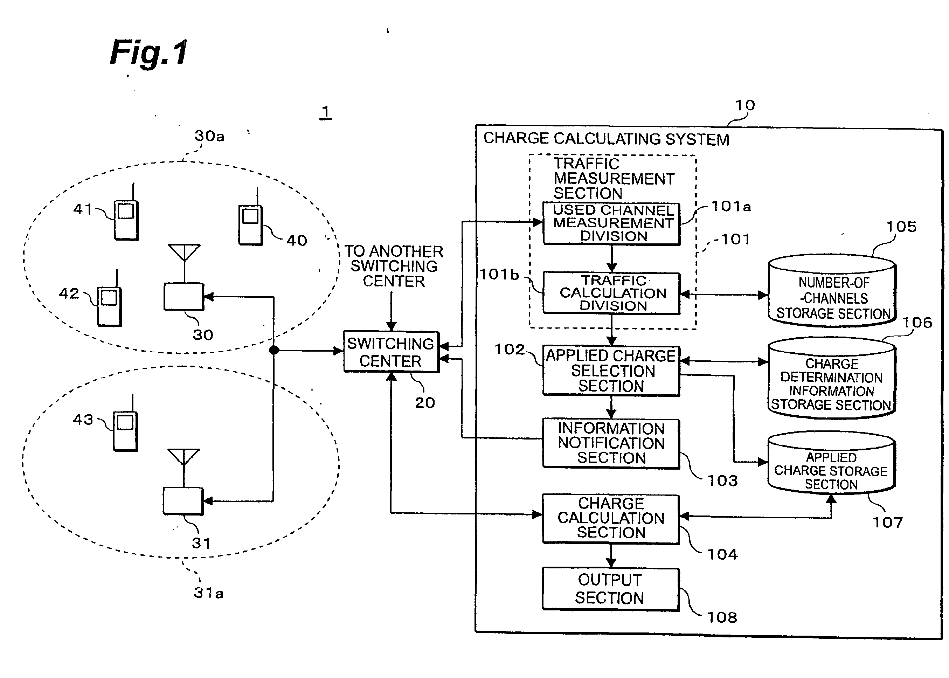

The following will describe a communication system 1 incorporating a charge calculating system 10 as an embodiment of the present invention. Fig. 1 is a diagram showing a configuration of the communication system 1. The communication system 1 is comprised of base station 30 and base station 31, switching center 20, and charge calculating system 10. Mobile telephones 40 to 42 are located in a cell 30a covered by the base station 30, while a mobile telephone 43 is located in a cell 31a covered by the base station 31.

The base station 30 and the base station 31 can receive radio waves from the mobile telephones 41 to 43 located in the cell 30a and the cell 31a, respectively, as communicable areas of their own, and can transmit radio waves to the mobile telephones. Each of the cells 30a and 31a is one of those covering the service area in a so-called small zone configuration. In the present embodiment, the base stations 30 and 31 are positioned at the centers of the cells 30a and 31a and their respective antennas have no directivity. It is, however, possible to employ a configuration wherein antennas with directivities are used to cover their respective zones obtained by further dividing each of the cells 30a and 31a.

The base station 30 and base station 31, and the mobile telephones 41 to 43 operate through multiple access based on the TDMA system, in which an available frequency band is divided and signals are transmitted by time division multiplexing of three channels or six channels in the divided band. This system permits the base station 30 and the base station 31 to secure a number of channels, but in the present embodiment, let us suppose for convenience of description that three channels are allocated to the base station 30 and six channels to the base station 31.

The base station 30 and the base station 31 are connected to the switching center 20. While the switching center 20 is connected to the base station 30 and the base station 31, it is also configured to be communicable with another switching center (not shown) or with a fixed telephone network. The switching center 20 is also connected to a location registration database (not shown) to register location information on the mobile phones 40 to 43 in the cell 30a and the cell 31a covered by the base station 30 and the base station 31 under connection to the switching center 20.

Subsequently, the charge calculating system 10 will be described. The charge calculating system 10 is constructed physically as a computer system (e.g., a workstation or a personal computer) equipped with a CPU (central processing unit), a memory, input devices such as a mouse and a keyboard, a display device such as a display, a storage device such as a hard disk, and so on, and is configured so as to be able to perform transmission/reception of information to or from the switching center 20. The charge calculating system 10 is equipped with the following functional components: a traffic measurement section 101 (traffic measurement means) consisting of a used channel measurement division 101a and a traffic calculation division 101b; an applied charge selection section 102 (applied charge selection means); an information notification section 103 (first information notification means and second information notification means); a charge calculation section 104 (charge calculation means); a number-of-channels storage section 105; a charge determination information storage section 106 (charge determination information storage means); an applied charge storage section 107; and an output section 108. Each of the components will be described below in detail.

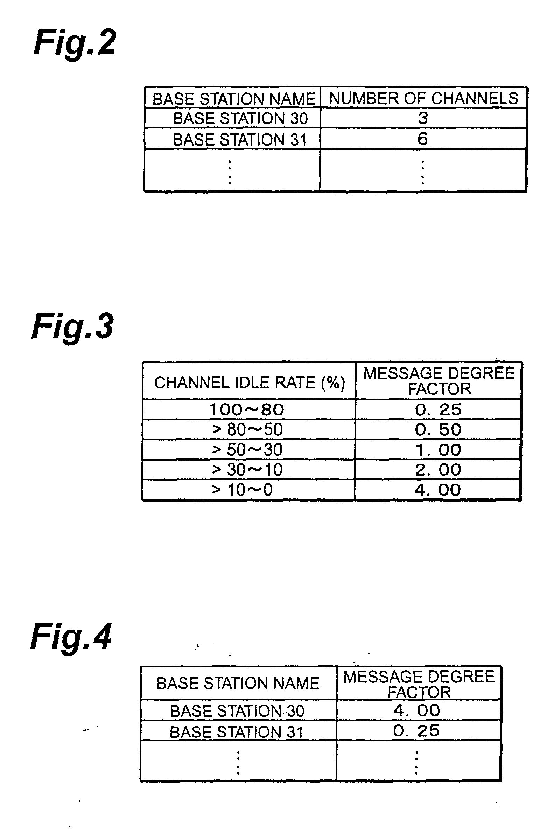

The number-of-channels storage section 105 is a portion for storing the numbers of channels at the respective base stations 30 and 31 connected to the switching center 20. Fig. 2 is a diagram showing an example of data stored in the number-of-channels storage section 105. The number-of-channels storage section 105 stores the correspondence between each base station name and the number of channels, e.g., the number of channels: 3 to the base station 30 and the number of channels: 6 to the base station 31.

The used channel measurement division 101a is a portion for performing transmission/reception of information to or from the switching center 20 to measure the number of used channels at the base station 30 and the base station 31 under connection to the switching center 20. The used channel measurement division 101a measures the number of used channels on a periodic basis, and methods of the periodic measurement include a method of performing the measurement at predetermined time intervals, a method of performing the measurement every time the number of used channels at the base station 30 and the base station 31 exceeds a threshold, and so on. Referring to Fig. 1, the used channel measurement division 101a performs the measurement so that the number of used channels at the base station 30 is 3 and the number of used channels at the base station 31 is 1. The used channel measurement division 101a feeds the numbers of used channels thus measured, to the traffic calculation division 101b.

The traffic calculation division 101b is a portion for receiving the numbers of used channels from the used channel measurement division 101a and calculating a channel idle rate as information indicating the traffic of each of the base station 30 and the base station 31. The traffic calculation division 101b subtracts the numbers of used channels from the numbers of channels of the base station 30 and the base station 31 stored at the number-of-channels storage section 105. Then the traffic calculation division 101b divides the results of the subtraction by the respective numbers of allocated channels to yield the channel idle rates of the base station 30 and the base station 31. Referring to Fig. 1, in the case of the present embodiment, the channel idle rate of the base station 30 is 0%, and that of the base station 31 83%. The traffic calculation division 101b feeds the channel idle rates thus calculated, to the applied charge selection section 102.

The charge determination information storage section 106 is a portion for storing message degree factors as charge determination information, corresponding to channel idle rates. Here a message degree is a coefficient calculated according to a call duration and a call distance of a mobile phone and multiplied by a unit charge to obtain a call charge, and a message degree factor is a coefficient by which the message degree is multiplied to increase or decrease the call charge. Fig. 3 is a diagram showing an example of data stored in the charge determination information storage section 106. The charge determination information storage section 106 stores the correspondence between channel idle rates and message degree factors, e.g., the message degree factor: 0.25 to the channel idle rates of 100% to 80%, the message degree factor: 0.50 to the channel idle rates of 80% exclusive to 50%, and so on. Although the present embodiment describes the example of storing the correspondence between channel idle rates and message degree factors, the storage section may be configured to store correspondence between channel idle rates and message degrees.

The applied charge selection section 102 is a portion for selecting a message degree factor as charge determination information applied to each mobile phone 40 to 43 performing the transmission/reception of information through the base station 30 and the base station 31, using the channel idle rates of the base station 30 and the base station 31 from the traffic calculation division 101b. In the case of the present embodiment, the applied charge selection section 102 selects the message degree factor of 4.00 on the basis of the channel idle rate of 0% at the base station 30 and also selects the message degree factor of 0.25 on the basis of the channel idle rate of 83% at the base station 31. The applied charge selection section 102 feeds the selected message degree factors to the applied charge storage section 107. The applied charge selection section 102 also feeds the channel idle rates from the traffic calculation division 101b and the selected message degree factors to the information notification section 103.

The applied charge storage section 107 is a portion for receiving the message degree factors of the base station 30 and the base station 31 selected by the applied charge selection section 102 and storing the message degree factors of the respective base stations 30 and 31. Fig. 4 is a diagram showing an example of data stored in the applied charge storage section 107. In the case of the present embodiment, the applied charge storage section 107 stores the correspondence between each base station name and message degree factor, e.g., the message degree factor: 4.00 to the base station 30, the message degree factor: 0.25 to the base station 31, and so on.

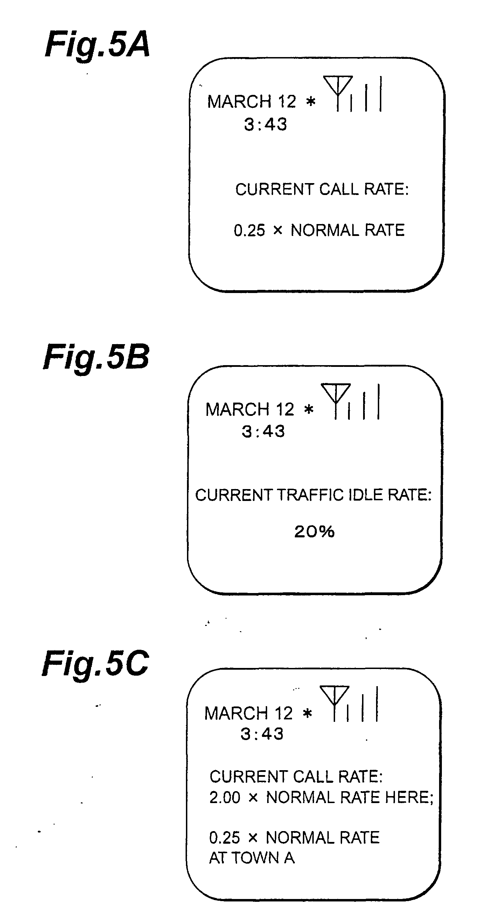

The information notification section 103 is a portion for feeding such information as the channel idle rates of the base station 30 and the base station 31 calculated by the traffic calculation division 101b and the message degree factors selected by the applied charge selection section 102, via the switching center 20 and via the base station 30 and the base station 31 to the mobile phones 40 to 43. After the information notification section 103 receives the information of the channel idle rates and the message degree factors from the applied charge selection section 102, it feeds the received information to the mobile phones 40 to 43 in response to a request therefrom, or it feeds the information when the mobile phones 40 to 43 perform transmission/reception of information through the base station 30 and the base station 31, e.g., on the occasion of making a call. Fig. 5(a), Fig. 5(b), and Fig. 5(c) are diagrams showing respective examples in which the information sent from the information notification section 103 to the mobile phones 40 to 43 is displayed on the display unit of the mobile phones 40 to 43. When the information notification section 103 sends a message degree factor, the display unit provides an indication of "current call rate: 0.25 × normal rate," as shown in Fig. 5(a). When the information notification section 103 sends a channel idle rate, the display unit provides an indication of "current channel idle rate: 20%," as shown in Fig. 5(b). When the information notification section 103 also sends a message degree factor of an adjacent cell in addition to a message degree factor of a currently communicating cell, the display unit provides an indication of "current call rate: 2.00 × normal rate here; 0.25 × normal rate at Town A," as shown in Fig. 5(c).

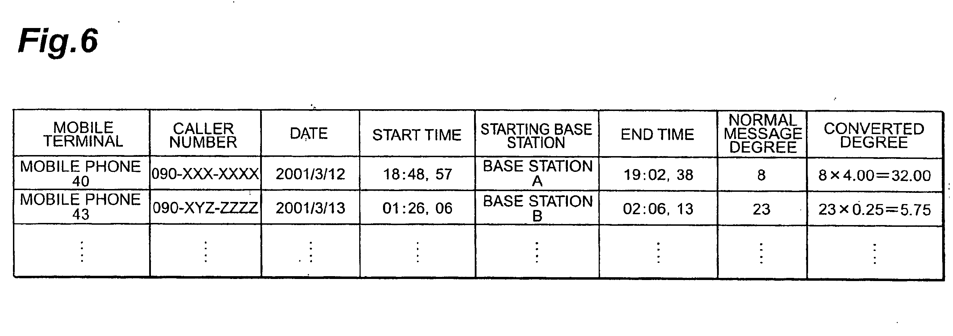

The charge calculation section 104 is a portion for calculating charges for use of the mobile phones 40 to 43 performing the transmission/reception of information through the base station 30 and the base station 31 under connection to the switching center 20. The charge calculation section 104 measures or calculates such information as a call date, a call start time, a call start base station, a call end time, a normal message degree, and a reduced degree for each of the mobile phones 40 to 43. Fig. 6 is a diagram showing an example of information measured or calculated by the charge calculation section 104. The charge calculation section 104 measures the information of the call date, call start time, call start base station, and call end time of each mobile phone 40 to 43 through the transmission/reception of information to or from the switching center 20. The charge calculation section 104 calculates a normal message degree from the call start time and the call end time and from the call distance and also calculates a reduced degree with reference to the information stored in the applied charge storage section 107, on the basis of the call start base station measured. A charge for use of each mobile phone 40 to 43 is calculated based on the reduced degree. The charges for use of the mobile phones 40 to 43 may be calculated by the charge calculation section 104, or they may be calculated by a device other than the charge calculating system 10 while converted degrees are stored separately. The charges calculated by the charge calculation section 104 are fed to the output section 108. The output section 108 outputs the charges to a predetermined computer system to enable collection of the charges.

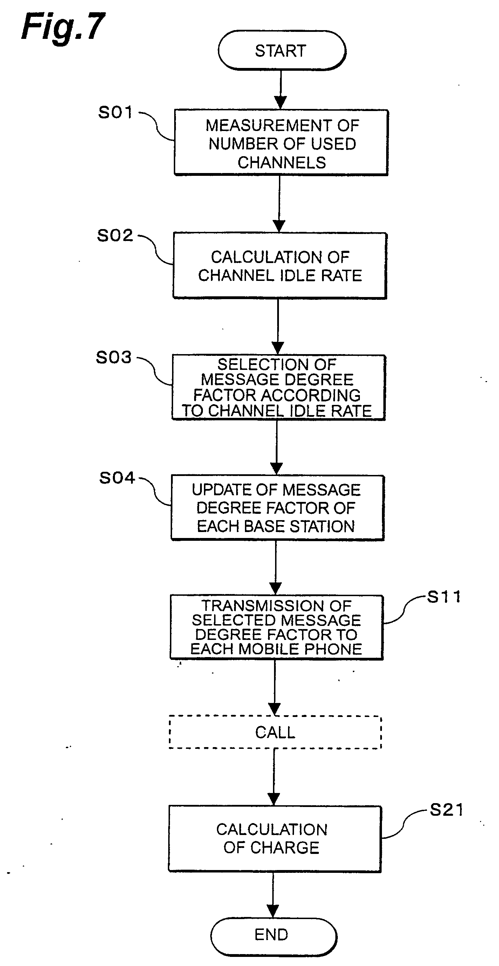

The following will describe the flow of processing carried out by the charge calculating system 10. Fig. 7 is a chart showing the processing flow of the charge calculating system 10. At the first step, the used channel measurement division 101a measures the numbers of used channels at the base station 30 and the base station 31 (step S01). The traffic calculation division 101b calculates the channel idle rates of the base station 30 and the base station 31 on the basis of the numbers of used channels measured at step S01 and the numbers of channels of the base station 30 and the base station 31 stored in the number-of-channels storage section 105 (step S02).

The applied charge selection section 102 selects the message degree factors to be applied to the mobile phones performing the transmission/reception of information through the base station 30 and the base station 31, on the basis of the channel idle rates calculated at step S02 and the message degree factors stored in the charge determination information storage section 106 (step S03). The applied charge selection section 102 stores the selected message degree factors in the applied charge storage section 107 to update the message degree factors of the base station 30 and the base station 31 (step S04). The charge calculating system 10 performs the processing from step S01 to step S04 on a periodic basis to adequately update the information stored in the applied charge storage section 107. Methods of performing the periodic processing include a method of looping the processing flow of step S01 to step S04 at predetermined time intervals, a method of looping the processing flow of step S01 to step S04 whenever the number of used channels measured by the used channel measurement section 101a exceeds a threshold, and so on.

The information notification section 103 notifies the mobile phones 40 to 43 located in the cell 30a and the cell 31a, of the message degree factors selected at step S03 (step S11). The notification timing can be selected from an occasion of receiving a request from each mobile phone 40 to 43, an occasion of the applied charge selection section 102 selecting new charge determination information, and so on. Another embodiment can be a method of notifying each mobile phone of the latest charge determination information upon a start of a call at the mobile phone 40 to 43. The charge calculation section 104 calculates message degrees according to calls of the respective mobile phones and calculates charges for use by multiplying the calculated message degrees by message degree factors (step S21). The output section 108 outputs the calculated charges to the predetermined computer system to enable collection of the charges.

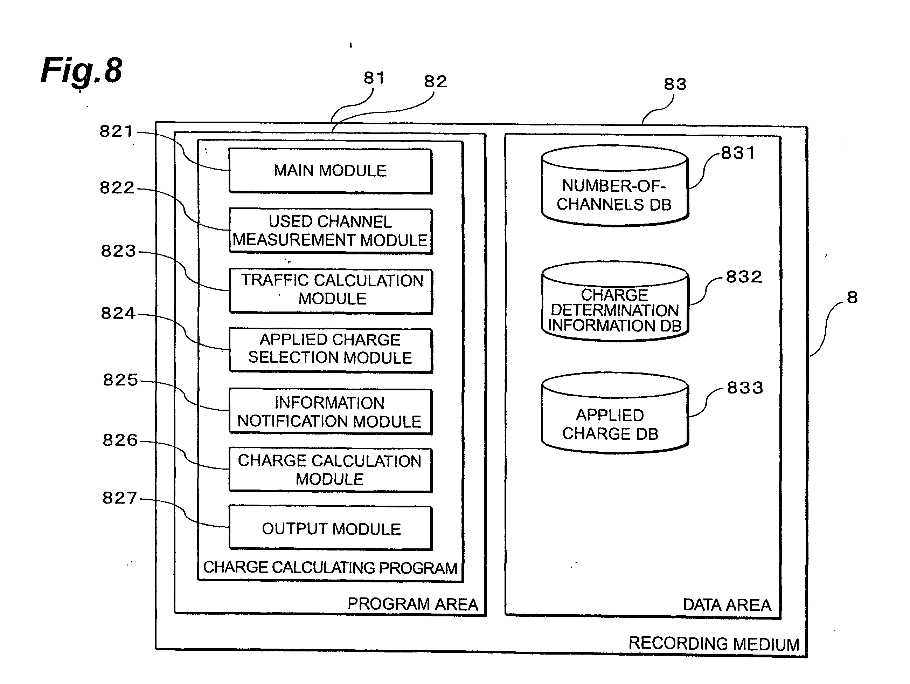

The following will describe a charge calculating program 82 for making a computer function as the charge calculating system 10 as an embodiment of the present invention and a computer-readable recording medium 8 in which it is recorded. Fig. 8 is a block diagram showing a configuration of the recording medium 8 in which the charge calculating program 82 is recorded. The recording medium 8 can be, for example, a magnetic disk, an optical disk, a CD-ROM, a memory incorporated in a computer, or the like.

The recording medium 8, as shown in Fig. 8, is provided with a program area 81 for recording of the program, and a data area 83 for recording of data. Stored in the data area 83 are a number-of-channels database 831 similar to the number-of-channels storage section 105 described with Figs. 1 and 2, a charge determination information database 832 similar to the charge determination information storage section 106 described with Figs. 1 and 3, and an applied charge database 833 similar to the applied charge storage section 107 described with Figs. 1 and 4.

The charge calculating program 82 is recorded in the program area 81. The charge calculating program 82 consists of a main module 821 for controlling the processing; a used channel measurement module 822 for measuring the number of used channels; a traffic calculation module 823 for calculating a channel idle rate on the basis of the number of used channels measured and the number of channels stored; an applied charge selection module 824 for selecting a message degree factor on the basis of the channel idle rate calculated and the message degree factors stored; an information notification module 825 for notifying each mobile phone 40 to 43 of the message degree factor or the channel idle rate; a charge calculation module 826 for calculating a charge for use on the basis of the message degree factor stored; and an output module 827. The functions implemented by the respective operations of the used channel measurement module 822, traffic calculation module 823, applied charge selection module 824, information notification module 825, charge calculation module 826, and output module 827 are similar to those of the respective used channel measurement division 101a, traffic calculation division 101b, applied charge selection section 102, information notification section 103, charge calculation section 104, and output section 108 of the aforementioned charge calculating system 10.

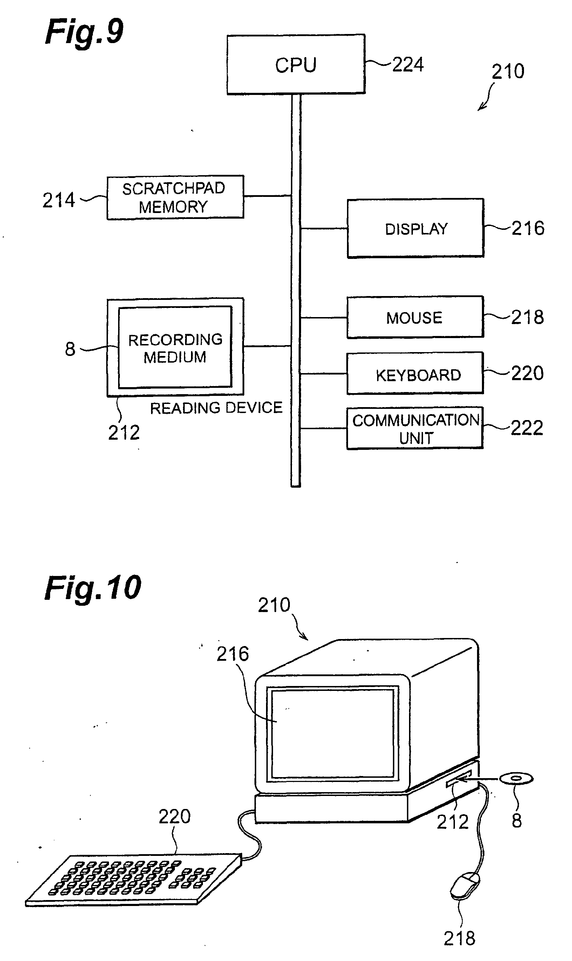

Fig. 9 is a block diagram showing a system configuration of a computer (e.g., a server system) for executing the charge calculating program 82 recorded in the recording medium 8, and Fig. 10 a perspective view of the computer for executing the charge calculating program 82 recorded in the recording medium 8. The computer 210, as shown in Figs. 9 and 10, is provided with a reading device 212, a scratchpad memory (RAM) 214, a display 216 as a display means, a mouse 218 and a keyboard 220 as input means, a communication unit 222 as a communication means, and a CPU 224 for controlling execution of the fright information providing program 202 and others. When the recording medium 8 is set in the reading device 212, the information recorded in the recording medium 8 becomes accessible from the reading device 212 and the computer 210 can execute the charge calculating program 82 recorded in the program area 81 of the recording medium 8.

The recording device 212 can be a flexible disk drive unit, a CD-ROM drive unit, a magnetic tape drive unit, or the like selected according to the recording medium 8.

The operation and effect of the embodiment of the present invention will be described. The used channel measurement division 101a measures the numbers of channels used at the base station 30 and the base station 31 and the traffic calculation division 101b calculates the channel idle rates on the basis of the numbers of channels stored in the number-of-channels storage section 105 and the numbers of used channels thus measured, whereby the channel idle rates can be measured as information indicating the traffic. The applied charge selection section 102 selects the message degree factors as the charge determination information stored in the charge determination information storage section 106, on the basis of the channel idle rates as the information indicating the traffic of the base station 30 and base station 31 measured by the traffic measurement section 101, and thus the charge calculation section 104 can calculate the charges according to the channel idle rates of the base station 30 and the base station 31, using the selected message degree factors.

Since the traffic measurement section 101 measures the channel idle rates of the base station 30 and the base station 31 on a periodic basis, the applied charge selection section 102 can select the message degree factors on a periodic basis, and the charge calculation section 104 can calculate the charges according to the actual channel idle rates of the base station 30 and the base station 31, using the message degree factors selected on a periodic basis.

Since the information notification section 103 notifies the mobile phones 40 to 43 of the message degree factors selected by the applied charge selection section 102 or the channel idle rates calculated by the traffic calculation division 101b, the information can be used, for example, as reference information when the users using the mobile terminals determine whether to use the mobile terminal or not. Industrial Applicability

According to the invention as described, the charge determination information is selected from those stored in the charge determination information storage means, on the basis of the traffic of the base station measured by the traffic measurement means, and thus the charge for use according to the actual traffic of the base station can be calculated using the selected charge determination information.

In the present invention, when the traffic measurement means is configured to measure the traffic of the base station on a periodic basis, the actual traffic of the base station is measured on a periodic basis and the charge determination information can thus be selected on a periodic basis, whereby the charge for use according to the actual traffic of the base station can be calculated using the charge determination information selected on a periodic basis.

In the present invention, when the system is configured to further comprise information notification means for notifying the mobile terminal performing the transmission/reception of information through the base station, of the charge determination information selected by the applied charge selection means, the mobile terminal can be notified of the charge determination information selected by the applied charge selection means, and the charge determination information can be used, for example, as reference information when the user using the mobile terminal determines whether to use the mobile terminal or not.

In the present invention, when the system is configured to further comprise information notification means for notifying the mobile terminal performing the transmission/reception of information through the base station, of the traffic of the base station measured by the traffic measurement means, the mobile terminal can be notified of the traffic of the base station measured by the traffic measurement means, and the traffic can be used, for example, as reference information when the user using the mobile terminal determines whether to use the mobile terminal or not.

## Claims

1. A charge calculating system comprising:
charge determination information storage means for storing charge determination information for calculating a charge for use in transmission/reception of information at a mobile terminal, corresponding to traffic of a base station communicating with the mobile terminal;
traffic measurement means for measuring the traffic of the base station;
applied charge selection means for selecting charge determination information to be applied to the mobile terminal performing transmission/reception of information through the base station, from the charge determination information stored in the charge determination information storage means, on the basis of the traffic measured; and
charge calculation means for calculating a charge for use of the mobile terminal performing the transmission/reception of information through the base station, on the basis of the charge determination information selected.

2. The charge calculating system according to Claim 1, wherein said traffic measurement means measures the traffic of said base station on a periodic basis.

3. The charge calculating system according to Claim 1, further comprising first information notification means for notifying the mobile terminal performing the transmission/reception of information through the base station, of the charge determination information selected by said applied charge selection means.

4. The charge calculating system according to Claim 1, further comprising second information notification means for notifying the mobile terminal performing the transmission/reception of information through said base station, of the traffic of the base station measured by said traffic measurement means.

5. A charge calculating method comprising:
a first step of letting traffic measurement means measure traffic of a base station communicating with a mobile terminal;
a second step of letting applied charge selection means select charge determination information to be applied to the mobile terminal performing transmission/reception of information through said base station, on the basis of the traffic measured by said traffic measurement means, from charge determination information for calculating a charge for use in the transmission/reception of information at the mobile terminal, which charge determination information storage means stores corresponding to traffic of the base station; and
a third step of letting charge calculation means calculate a charge for use of the mobile terminal performing the transmission/reception of information through the base station, on the basis of the charge determination information selected by the applied charge selection means.

6. The charge calculating method according to Claim 5, wherein at said first step said traffic measurement means measures the traffic of the base station on a periodic basis.

7. The charge calculating method according to Claim 5, further comprising a fourth step of letting first information notification means notify the mobile terminal performing the transmission/reception of information through the base station, of the charge determination information selected by said applied charge selection means.

8. The charge calculating method according to Claim 5, further comprising a fourth step of letting second information notification means notify the mobile terminal performing the transmission/reception of information through the base station, of the traffic of said base station measured by said traffic measurement means.

9. A charge calculating program for making a computer function as:
charge determination information storage means for storing charge determination information for calculating a charge for use in transmission/reception of information at a mobile terminal, corresponding to traffic of a base station communicating with the mobile terminal;
traffic measurement means for measuring the traffic of the base station;
applied charge selection means for selecting charge determination information to be applied to the mobile terminal performing transmission/reception of information through the base station, from the charge determination information stored in the charge determination information storage means, on the basis of the traffic measured; and
charge calculation means for calculating a charge for use of the mobile terminal performing the transmission/reception of information through the base station, on the basis of the charge determination information selected.

10. The charge calculating program according to Claim 9, wherein said traffic measurement means measures the traffic of said base station on a periodic basis.

11. The charge calculating program according to Claim 9, wherein the computer is made to function further as first information notification means for notifying the mobile terminal performing the transmission/reception of information through the base station, of the charge determination information selected by said applied charge selection means.

12. The charge calculating program according to Claim 9, wherein the computer is made to function further as first information notification means for notifying the mobile terminal performing the transmission/reception of information through said base station, of the traffic of the base station measured by said traffic measurement means.

13. A computer-readable recording medium in which the charge calculating program as set forth in one of Claims 9 to 12 is recorded.
